# EUROPEAN PATENT APPLICATION

(11) **EP 4 287 226 A1**
(43) Date of publication of application: **06.12.2023**
(21) Application number: 22745630.8
(22) Date of filing: 17.01.2022
(51) Int. Cl.: H01F 41/02, B22F 3/00, B22F 3/02, B22F 3/14, B22F 3/24, B22F 7/04, B22F 7/08, C22C 33/02, C22C 38/00, H01F 1/057, H01F 7/02

(54) **ND-FE-B MULTILAYER SINTERED MAGNET AND METHOD FOR PRODUCING SAME**

(30) Priority: 26.01.2021 JP 2021010537
(71) Applicant: NDFEB Corporation, Kyoto-shi, Kyoto 615-8530 (JP)
(72) Inventor: SAGAWA, Masato, Kyoto-shi, Kyoto 615-8530 (JP)
(74) Representative: Abitz & Partner
(86) International application number: PCT/JP2022/001412
(87) International publication number: WO 2022/163407

(57) **Abstract**

The present invention provides: a Nd-Fe-B multilayer sintered magnet which is magnetically uniform, while having high magnetic characteristics; and a method for producing the Nd-Fe-B sintered magnet without performing a cutting step.

The method of the present invention comprises the steps of:
producing a Nd-Fe-B thin plate-shaped sintered magnet in which the c-axis direction of an Nd₂Fe₁₄B tetragonal compound is oriented within the main surface of the Nd-Fe-B thin plate-shaped sintered magnet, and which has a high degree of orientation of 90% or more and a thickness of 3 mm or less, without performing a cutting step, by supplying and filling an alloy powder into a mold having a structure partitioned by a plurality of partition plates arranged at a predetermined interval, applying a magnetic field in a direction parallel to a main surface of a cavity partitioned by the partition plates to orient the alloy powder, and then performing sintering, and
laminating a plurality of Nd-Fe-B thin plate-shaped sintered magnets obtained by the above step.

## Description

### TECHNICAL FIELD

The present invention relates to a Nd-Fe-B multilayer sintered magnet, particularly a Nd-Fe-B multilayer sintered magnet used for a large motor such as a main motor of an electric vehicle, or a generator, and a method for producing the same.

### BACKGROUND TECHNOLOGY

A Nd-Fe-B sintered magnet was invented by the inventor of the present application in 1982 (JP S61-34242 B), and not only the magnet far exceeds the magnetic properties of conventional permanent magnet materials, but also is inexpensive because it contains a resource-rich raw material such as neodymium (Nd: a kind of rare earth element), iron, and boron as a main component, and the market has been steadily expanded as an ideal permanent magnet material. The use thereof is diverse, such as a computer HDD (hard disk drive), a motor for driving a magnetic head (VCM: voice coil motor), high-end speakers, headphones, an electric assist bicycle, a golf cart, and a permanent magnet magnetic resonance diagnostic equipment (MRI). Further, in recent years, practical use has been rapidly advanced in motors for driving hybrid cars and electric vehicles, energy-saving and low-noise large home appliances (air conditioners and refrigerators), elevators, and other industrial motors.

However, the Nd-Fe-B sintered magnet has high magnetic properties, but has a disadvantage that the temperature characteristics are not good, and particularly the temperature characteristics of the coercive force are important. When used in home appliances and industrial motors, a temperature rise caused by coil current cannot be avoided. Further, since a reverse magnetic field acts from the motor armature, irreversible demagnetization occurs in the permanent magnet when the temperature rises and the coercive force decreases. Therefore, in order to prevent irreversible demagnetization, the coercive force must be increased in advance.

After the Nd-Fe-B sintered magnet was found, effects such as additive elements (Japanese Patent No. 1606420, etc.), heat treatment (Japanese Patent No. 1818977, etc.), and crystal grain size control (Japanese Patent No. 1662257, etc.) have been clarified in order to improve their properties such as coercive force, but the addition of heavy rare earth elements (Dy, Tb) was the most effective way to improve coercive force (Japanese Patent No. 1802487). However, when a large amount of the heavy rare earth element is used, the coercive force is reliably increased, but the saturation magnetization is lowered, and the maximum energy product is lowered. In addition, since Dy and Tb are rare in resources and expensive, it is difficult to meet electric vehicles and industrial and domestic motors which are expected to be in great demand.

Thereafter, a method in which only the coercive force can be increased without substantially causing a decrease in saturation magnetization or maximum energy product by a grain boundary diffusion (GBD) method, in which a sintered body is produced and a metal such as Dy/Tb or compound is diffused into a grain boundary inside the sintered body from the outside by heat treatment instead of adding Dy/Tb or the like to the alloy composition, has been found (Japanese Patent No. 4450239, etc.).

On the other hand, as a magnet for an electric vehicle, a Nd-Fe-B sintered magnet, in which magnets are divided and laminated, has been proposed in order to reduce loss due to eddy current generation during operation and suppress heat generation in the magnet to reduce temperature rise of the magnet. In one example of this proposal, Dy fluoride powder is applied to a Nd-Fe-B sintered magnet having a thickness of 5 mm, and the sintered magnet is heated in Ar at 900°C for 1 hour to perform a grain boundary diffusion treatment, and then 18 divided magnets are stacked and inserted into a magnet insertion hole of a motor rotor and hardened with an epoxy resin. An IPM motor equipped with a rotor produced in this manner is proposed in JP 2011-78268 A.

As another important background technology, a magnet powder molding and orientation technology for producing a Nd-Fe-B sintered magnet is mentioned. Magnet manufacturers worldwide produce Nd-Fe-B sintered magnets by a die press method in a magnetic field. That is, magnet alloy powder is oriented in a die to which a magnetic field is applied, pressure-formed, and the oriented green compact is sintered to produce a sintered magnet, and in this method, a thin plate-shaped magnet in high demand is produced by producing a large block-shaped magnet and then mechanically cutting the block-shaped magnet.

In contrast, the present inventor has developed and proposed "press-less process: PressLess Process (PLP)" (see Patent Document 1 and the like described below). In this method, the powder-compacted body produced by the magnetic field die press method is not conveyed to the sintering furnace, but the magnet alloy fine powder densely packed in a filling container (hereinafter referred to as "mold") is oriented in the magnetic field, and the powder filled in the mold is conveyed to the sintering furnace as it is. A thin plate-shaped magnet is produced by filling a magnet alloy powder in the mold having a dish-shaped cavity with a shallow bottom and a large area, orienting, and then sintering, and the orientation direction of the thin plate-shaped magnet is perpendicular to the main surface of the thin plate.

In the conventional pressing method, it is necessary to produce a powder-compacted body having sufficient strength for conveyance to the sintering step, which is the next step, and thus it is difficult to produce a highly oriented thin plate-shaped green compact by the pressing method. In contrast, in the PLP method, the powder-oriented body was conveyed together with the mold, and thus the thin plate-shaped magnet was able to be directly produced industrially.

Further, the "New-PLP method=NPLP method", which is a further improvement of the above "PLP method", was also proposed by the inventor of the present application (see Patent Document 2 and the like described below). In this NPLP method, a magnetic alloy fine powder is filled in the mold at an appropriate density and oriented in a magnetic field to form an oriented and packed body of magnetic alloy fine powder, and then an outer wall member of the mold is removed, transferred to a sintering base plate, and carried into a sintering furnace. When manufacturing a thin-plate magnet, the cavity in the mold is divided into narrow cavities by a plurality of partition plates, and the narrow cavities partitioned by the partition plates are filled with the magnet alloy powder.

The mold is then capped and a magnetic field is applied to orient the magnet alloy powder. The application direction of magnetic field is perpendicular to the main surface of the narrow cavity. Thereafter, when the mold and the powder-oriented body are transferred to the sintering base plate, the outer wall of the mold is removed, and only a powder/partition plate laminate composed of multilayer powder/partition plates formed inside the mold is left on the sintering base plate. Then, the powder/partition plate laminate left on the sintering base plate is heated in a sintering furnace to produce a plurality of thin plate-shaped sintered bodies.

Molds used in the production of sintered magnets are made of materials that require a certain degree of precision, however, when the mold is exposed to a high sintering temperature of 1000°C or higher many times, the mold is consumed, and thus there is a problem that the cost of the mold is increased in the PLP method. But in the case of the NPLP method, since the mold is not placed in the sintering furnace, the problem of the mold cost is solved.

In this way, a technique for directly producing a thin plate-shaped Nd-Fe-B sintered magnet without machining was established by the PLP method and the NPLP method described above. In these thin plate magnets, the orientation direction of the magnets, that is, the magnetization direction is a direction perpendicular to the main surface of the thin plate.

### PRIOR ART DOCUMENTS

### PATENT DOCUMENTS

Patent Document 1: JP 4391897 B
Patent Document 2: JP 6280137 B

### SUMMAY OF THE INVENTION

### PROBLEM TO BE SOLVED BY THE INVENTION

In the future, as the motorization of automobiles is increasingly advanced, it is desired that the Nd-Fe-B sintered magnet used for the main motor is lowered in cost to the limit while maintaining the highest magnetic properties, and that the amount of Dy and Tb contained in the magnet is reduced to the limit permitted in terms of resources. However, at present, the Nd-Fe-B magnets used in EV (Electric Vehicle) and HEV (Hybrid Electric Vehicle) include a certain amount of Dy or Tb, and thus the manufacturing cost is not sufficiently reduced.

The reason why the reduction of Dy and Tb in the above-described Nd-Fe-B sintered magnets for EV and HEV is not sufficient and the manufacturing cost cannot be reduced is that a layered magnet made by laminating Nd-Fe-B thin plate magnets cannot be manufactured at low cost. In order to produce a thin plate-shaped magnet of Nd-Fe-B sintered magnet, there is only a way for cutting out a thin magnet from a block magnet by machining such as a cutting grindstone or a wire saw. At this time, the thin plate magnet is cut so that the direction of easy magnetization is within the main surface of the thin plate. Cutting such a thin plate magnet from a block magnet requires expensive processing costs and also produces a large amount of chips, resulting in a large loss of material.

A silicon steel sheet, which is an iron core material used in a motor, is punched into a predetermined shape with a thickness of 0.5 mm or less and laminated to reduce overcurrent loss generated during motor operation. The Nd-Fe-B sintered magnet used in the same motor is also desirable because the eddy current loss can be reduced to the limit if it is used by being punched out thinly, but this is not possible. Therefore, the Nd-Fe-B sintered magnet used in the main motor of the electric vehicle is used as a split magnet having a thickness of about 5 mm as in the above-described known example (JP 2011-78268 A). Magnets having a thickness of 5 mm are cut out from a large mass of magnet (referred to as a block magnet) by machining, and thus processing costs and costs due to a reduction in material yield are incurred. In addition, the effect of reducing eddy current loss is insufficient in a laminate having a thickness of about 5 mm. Each thin plate-shaped magnet forming a layered magnet is referred to as a "unit magnet".

A layered magnet made from a unit magnet having a thickness of 5 mm reduces eddy current loss as compared with a non-laminated bulk magnet, but it is still not sufficiently reduced. The eddy current loss generated in the motor is expected to be greatly reduced if the layered magnet, in which the thickness of the unit magnet is thinner than 5 mm, for example, 3 mm or less, and the unit magnets are laminated, is used. However, making such a thin unit magnet requires a great deal of processing costs, and the loss of material as chips, that is, a reduction in material yield, is also costly, so it is not practical.

Another disadvantage of not being able to thin a Nd-Fe-B magnet is that when a thick magnet is subjected to grain boundary diffusion treatment, Tb and Dy do not spread over the entire magnet, resulting in uneven coercive force within the magnet. As in the above-described known example, even if magnets having a thickness of 5 mm are produced by splitting and the split unit magnets are subjected to a grain boundary diffusion treatment, it is difficult to achieve a uniform grain boundary diffusion effect to the inside of the magnets. When such magnets are stacked and attached to the motor, inherent non-uniformity of the coercive force is present in the magnet. This will remain in the electric vehicle as a weak point of the motor.

Since a laminated magnet composed of sufficiently thin unit magnets cannot be used as a magnet for the EV and HEV main motors, the motor temperature rises significantly during driving. In addition, since the unit magnet has a large thickness, the effect of improving the coercive force by the grain boundary diffusion method is insufficient and uneven.

For these reasons, as the Nd-Fe-B sintered magnet used for the current main motor for EVs, a sintered Nd-Fe-B magnet made of a material in which 2 to 3% or more of Tb and Dy are contained in a base material is used, but Tb and Dy are contained only in small amounts in rare earth ore.

In the Nd-Fe-B magnets used for EVs and HEVs, it is strongly desired that the amounts of Tb and Dy used are suppressed within the limit of the components contained in monazite and bastenacite, which are known as abundant rare earth ores, and the limit is 0.5% based on the weight of the Nd-Fe-B magnet.

Therefore, an object of the present invention is to provide a Nd-Fe-B multilayer sintered magnet having magnetically uniform and high magnetic properties. Further, another object of the present invention is to provide a method capable of producing a layered magnet composed of ultra-thin unit magnets (for example, thickness of 3 mm or less, preferably 2.5 mm or less) without a cutting step after sintering Nd-Fe-B sintered magnets.

### MEANS FOR SOLVING PROBLEM

The present inventor has found that the above problems can be solved by adopting the following 1) to 7), and completed the present invention.
1) In order to reduce eddy current loss generated in a magnet to an extreme limit, the thickness of a unit magnet of a layered magnet is set to 3 mm or less (preferably 2.5 mm or less), and the number of layers in the laminate is set to 4 or more, preferably 10 or more;
2) In order to reduce machining cost to an extreme limit, the PLP method or NPLP method is used to directly produce a Nd-Fe-B thin plate-shaped sintered magnet in which the c-axis direction (direction of easy magnetization) of an Nd₂Fe₁₄B tetragonal compound is oriented within the main surface of the Nd-Fe-B thin plate-shaped sintered magnet without machining;
3) Unit magnets having a thickness of 3 mm or less produced by using the PLP method or NPLP method are adhered with an adhesive or pressed by a hot press method to produce a layered magnet;
4) If necessary, grain boundary diffusion treatment is applied to the unit magnets in order to increase the coercive force. The grain boundary diffusion treatment is performed either before or after laminating the unit magnets;
5) In order to reduce the cost of the layered magnet and improve the performance as a layered magnet, lamination or grain boundary diffusion treatment is performed in a state where the surface layer containing a large amount of Nd generated during the production of the unit magnet is not completely removed but at least a portion of the surface layer is left;
6) The thickness of the unit magnet is set to 3 mm or less in order to make the grain boundary diffusion effect uniform and strong throughout the magnet; and
7) In order to increase the coercive force of the manufactured magnet, fine powder with an average particle size of 3 um or around that is used in the PLP or NPLP method.

That is, the present invention has the following constitutions.
[1] A method for producing a Nd-Fe-B multilayer sintered magnet in which Nd-Fe-B thin plate-shaped sintered magnets are laminated via a high electrical resistance layer, the method comprising the steps of:
   producing a Nd-Fe-B thin plate-shaped sintered magnet in which the c-axis direction of an Nd₂Fe₁₄B tetragonal compound is oriented within the main surface of the Nd-Fe-B thin plate-shaped sintered magnet, and which has a high degree of orientation of 90% or more and a thickness of 3 mm or less, without performing a cutting step, by supplying and filling an alloy powder into a mold having a structure partitioned by a plurality of partition plates arranged at a predetermined interval, applying a magnetic field in a direction parallel to a main surface of a cavity partitioned by the partition plates to orient the alloy powder, and then performing sintering, and
   laminating a plurality of Nd-Fe-B thin plate-shaped sintered magnets obtained by the above step.
[2] The method for producing a Nd-Fe-B multilayer sintered magnet according to [1], characterized in that the Nd-Fe-B thin plate-shaped sintered magnets are laminated in a state where at least a portion of the surface layer containing a large amount of Nd generated during the sintering on the surface of the Nd-Fe-B thin plate-shaped sintered magnet is left.
[3] The method for producing a Nd-Fe-B multilayer sintered magnet according to [1] or [2], characterized in that the Nd-Fe-B thin plate-shaped sintered magnets are laminated together by adhesion.
[4] The method for producing a Nd-Fe-B multilayer sintered magnet according to [1] or [2], characterized in that the Nd-Fe-B thin plate-shaped sintered magnets are pressure-bonded by hot pressing.
[5] The method for producing a Nd-Fe-B multilayer sintered magnet according to [1] or [2], characterized in that a compound powder or an alloy powder containing Dy and/or Tb is applied to each of the Nd-Fe-B thin plate-shaped sintered magnets to perform grain boundary diffusion treatment, and then the Nd-Fe-B thin plate-shaped sintered magnets are adhered to each other.
[6] The method for producing a Nd-Fe-B multilayer sintered magnet according to [1] or [2], characterized in that the Nd-Fe-B thin plate-shaped sintered magnets are adhered or pressure-bonded to each other in a state where a compound powder or an alloy powder containing Dy and/or Tb is interposed between the sintered Nd-Fe-B thin plate-shaped magnets, and then grain boundary diffusion treatment is performed.
[7] The method for producing a Nd-Fe-B multilayer sintered magnet according to [3], characterized in that the Nd-Fe-B thin plate-shaped sintered magnets are adhered to each other using an adhesive.
[8] The method for producing a Nd-Fe-B multilayer sintered magnet according to [3], characterized in that a plurality of the Nd-Fe-B thin plate-shaped sintered magnets are fixed in a state of being stacked in an injection die, and then a resin is injected into the die to adhere and form.
[9] The method for producing a Nd-Fe-B multilayer sintered magnet according to any one of [1] to [8], characterized in that 10 or more layers of the Nd-Fe-B thin plate-shaped sintered magnet are laminated.
[10] The method for producing a Nd-Fe-B multilayer sintered magnet according to any one of [1] to [9], characterized in that the Nd-Fe-B thin plate-shaped sintered magnet is produced by using any one of the following methods:
   a method in which an alloy powder is supplied and filled into a mold partitioned by a plurality of partition plates arranged at a predetermined interval, then orientation in a magnetic field is performed in the direction parallel to a main surface of a cavity partitioned by the partition plates, and then the alloy powder is conveyed to a sintering furnace and sintered while still filled in the mold; or
   a method in which an alloy powder is supplied and filled into the mold having a side wall divided into two or more sections and having a structure partitioned by a plurality of partition plates arranged at a predetermined interval to produce a filled body, then a magnetic field is applied in the direction inside the main surface of the filled body to orient the alloy powder in the filled body to produce an orientated-filled body, then the side wall of the mold is separated from the orientated-filled body to take out the orientated-filled body from the mold, and the orientated-filled body taken out is sintered.
[11] A Nd-Fe-B multilayer sintered magnet, which is a laminate, in which four or more layers of Nd-Fe-B thin plate-shaped sintered magnet in which c-axis direction of a Nd₂Fe₁₄B tetragonal compound is oriented in the main surface of the Nd-Fe-B thin plate-shaped sintered magnet, and which has a high orientation degree of 90% or more and a thickness of 3 mm or less, are laminated by adhesion or hot press compression bonding.
[12] The Nd-Fe-B multilayer sintered magnet according to [11], wherein the Nd-Fe-B thin plate-shaped sintered magnet is subjected to grain boundary diffusion treatment, and the Nd-Fe-B thin plate-shaped sintered magnet is adhered with an adhesive or is laminated by hot press compression bonding.

### EFFECT OF THE INVENTION

The effects of the present invention are as follows.
(1) After sintering the Nd-Fe-B sintered magnet, a multilayer magnet composed of ultra-thin unit magnets can be produced without a cutting step. Therefore, a multilayer magnet composed of extremely thin unit magnets can be produced industrially without generating a large amount of chips by the cutting step and without an expensive cutting step.
(2) A Nd-Fe-B multilayer sintered magnet having magnetic uniformity and high magnetic properties can be produced industrially.

Due to the above effects, the lamination required for reducing the eddy current loss is realized in all of the metallic magnetic materials in the main motor of the EV or the HEV. That is, the silicon steel sheet as the core material has been laminated to reduce eddy current loss so far, however, the lamination required for reducing eddy current loss can be realized industrially at low cost even in the Nd-Fe-B sintered magnet as the highest performance magnet for the first time by the technique of the present invention. In response to a request from a designer of the motor, the eddy current loss can be reduced by reducing the thickness of the thin plate-shaped unit magnet. Furthermore, due to the uniform grain boundary diffusion effect, it is possible to industrially produce a high coercive force multilayer magnet having a uniform coercive force as a whole of the multilayer magnet regardless of the size of the whole magnet.

### BRIEF DESCRIPTION OF DRAWING

FIG. 1 is a schematic diagram showing each step of the NPLP method (New-PressLess Process method) used in the production method of the present invention.
FIG. 2 is a figure showing a preferred example of a mold (used in Example 1) used in the production method of the present invention, in which a state when the alloy powder is filled in the mold is shown, an upper figure is a plan view, and a lower figure shows the structure in the cross section A-A in the upper figure, and the direction of the magnetic field during the orientation process is indicated by arrow.
FIG. 3 is a photograph showing the appearance of a unit magnet produced in Example 1 of the present invention, and a laminate produced by laminating the unit magnets by hot pressing.
FIG. 4 is a figure showing a method in which GBD (grain boundary diffusion) paste is applied between unit magnets (processing-less sintered base materials) and the unit magnets are laminated and pressed in Example 2.

### MODE FOR CARRYING OUT THE INVENTION

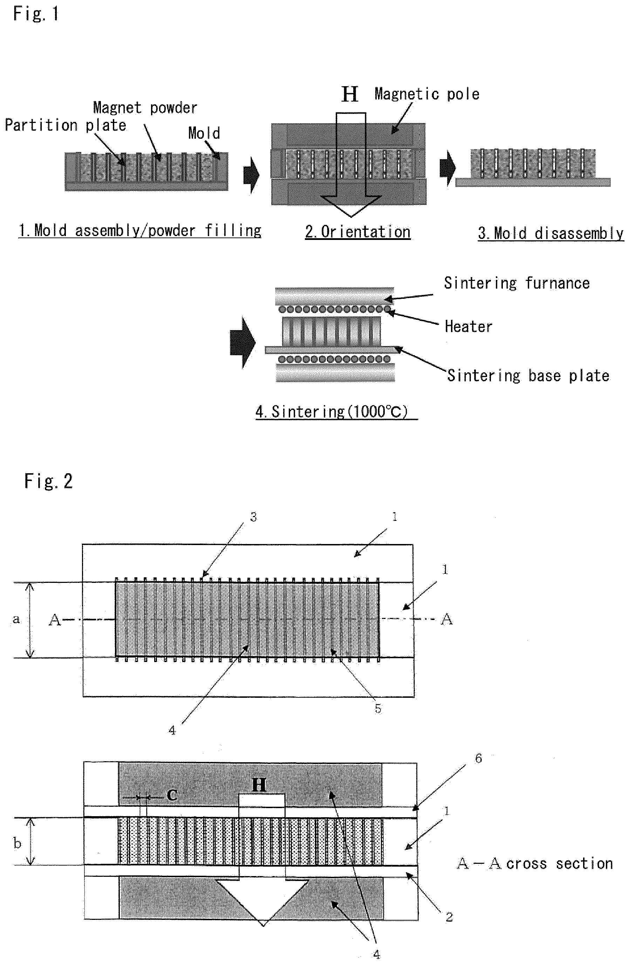

The present invention is a method for producing a Nd-Fe-B multilayer sintered magnet in which Nd-Fe-B thin plate-shaped sintered magnets are laminated via a high electrical resistance layer, and FIG. 1 shows a schematic diagram of the NPLP method used in the production method of the present invention.

In the first step of the production method of the present invention, a mold having a structure partitioned by a plurality of partition plates arranged at regular intervals is assembled, and an alloy powder (magnetic alloy powder) is fed and filled in the mold, and then a magnetic field is applied to orient the alloy powder, and then sintering is performed, thereby producing a Nd-Fe-B thin plate-shaped sintered magnet in which the c-axis direction of the Nd₂Fe₁₄B tetragonal compound is oriented within the main surface of the Nd-Fe-B thin plate-shaped sintered magnet, and which has a high orientation degree of 90% or more and a thickness of 3 mm or less, without performing a cutting step.

In this step, the mold having a structure in which a cavity in the mold is divided into narrow cavities by a plurality of partition plates arranged at a constant interval (preferably 1 mm to 5 mm, more preferably 1 mm to 3.5 mm) as shown in 1. of FIG. 1 is prepared, and an alloy powder is filled into the plurality of narrow cavities (cavities) separated by the partition plates (mold assembly/powder filling). At this time, the filling density of the alloy powder is preferably 3.4 to 3.8 g/cc.

FIG. 2 shows an example of the mold used in the producing method of the present invention which has side walls (outer wall members) divided into two or more parts and has a structure in which the side walls of the mold can remove after filling with the alloy powder. However, the structure of the mold used in the present invention is not limited to this, and a mold having a structure in which the side walls cannot be removed may be used.

In the mold illustrated in FIG. 2, a plurality of cavities 5 are formed by arranging a plurality of partition plates 3 at regular intervals inside the mold formed from four side plates 1 and a bottom plate 2, and magnetic poles 4 are arranged perpendicularly to the partition plates 3 on the top side and the bottom side of the mold, respectively. The magnetic pole 4 is made of a ferromagnetic or ferrimagnetic substance, and has the effect of uniformizing a magnetic field applied to the alloy powder and aligning the orientation direction thereof, and if it is made of a material that does not deform by sintering such as iron or silicon steel, there is no need to remove the magnetic pole during sintering. The magnetic pole 4 is useful and desirable for improving the quality of the sintered body by aligning the orientation directions of the magnetic particles in the sintered body, but is not necessary in a case where the orientation disturbance is negligible even without the magnetic pole.

Thereafter, the mold is covered as shown in 2. of Fig. 1, and a magnetic field H is applied in the direction of the arrow (the direction from top to bottom) to orient the alloy powder filled in the cavity of the mold, thereby obtaining an oriented-filled body. At this time, the application direction of the magnetic field is the direction within the main surface of the oriented-filled body (that is, the vertical direction), and a magnetic field stronger than a static magnetic field using the electromagnet can be applied by a pulse magnetic field using an air-core coil. And, when a strong magnetic field is applied, the crystal axes of the particles constituting the powder can be aligned in one direction, and thus the magnetic properties after sintering are improved.

In the production method of the present invention, a Nd-Fe-B thin plate-shaped sintered magnet in which the c-axis direction of the Nd₂Fe₁₄B tetragonal compound is oriented within the main surface of the Nd-Fe-B thin plate-shaped sintered magnet, and which has a high orientation degree of 90% or more and a thickness of 3 mm or less, can be produced, however, a desirable range of the strength of the applied magnetic field for producing such a thin plate-shaped sintered magnet is 3 Tesla or more, and 3.5 Tesla or more is required to obtain a high orientation in which the ratio of the residual magnetization to saturation magnetization is 93% or more, and 4 Tesla or more is required to obtain a high orientation of 95% or more.

In the present invention, normally, the electric charge stored in the capacitor bank is discharged in a short time, and a high magnetic field is generated by flowing a large current through the normally conductive air-core coil, and the width of one pulse magnetic field is usually between 1 ms and 1 second. The waveform of the pulse current may be a direct current (one-way) pulse waveform or an alternating current decay waveform. In the present invention, the pulse magnetic fields having both DC pulse and AC pulse waveforms may be combined, or a high magnetic field may be generated by flowing a large current through a high-temperature superconducting air-core coil. At this time, since it is difficult to change the current in a very short time in superconducting, the magnetic field may be applied for 1 second or more. However, considering the efficiency of the process, the time for applying the magnetic field is preferably 10 seconds or less.

After that, as shown in 3. of Fig. 1, when the mold and the oriented-filled body are transferred to a base plate for sintering, the outer wall of the mold is removed, and only the powder/partition plate laminate formed inside the mold is left on the base plate for sintering (mold disassembly), and conveyed into the sintering furnace. In the present invention, when a mold having a structure in which the side walls cannot be removed is used, the mold is conveyed into the sintering furnace as it is.

Thereafter, as shown in 4. of Fig. 1, the powder/partition plate laminate on the base plate for sintering is placed in a sintering furnace and sintered to obtain a plurality of Nd-Fe-B thin plate sintered magnets in which the c-axis direction of the Nd₂Fe₁₄B tetragonal compound is oriented within the main surface of the Nd-Fe-B thin plate sintered magnet can be produced directly without machining.

In the present invention, the sintering temperature and sintering time in the sintering step are appropriately determined based on the composition and the particle size of the alloy powder, but a typical sintering temperature in the case of an Nd-Fe-B based sintered magnet is about 900 to 1100°C, and a typical sintering time is about 10 to 40 hours including the heating time.

Furthermore, the production method of the present invention includes a step of laminating a plurality (preferably four or more layers) of the Nd-Fe-B thin plate-shaped sintered magnets obtained as described above, and in this case, the Nd-Fe-B thin plate-shaped sintered magnets may be laminated by adhering to each other using an adhesive, or may be laminated by hot pressing.

At this time, the following two types of modes can be exemplified as modes for pressure bonding by hot pressing.
(1) A stacked thin-layer unit magnet of at least four or more layers (for example, ten or more layers) is simply laminated by hot pressing at a high temperature of 700°C or higher to produce a multilayer magnet.
(2) A stacked thin-layer unit magnet of at least four or more layers (for example, ten or more layers) is disposed in a die in a hot press device, and the stacked thin-layer unit magnet is compressed by a vertical punch at a high temperature of 700°C or higher, and the thin-layer unit magnet is deformed in a direction perpendicular to the compression direction and pressed against the inner surface of the die, thereby adjusting the shape and dimensions of the laminate.

In the above-described lamination step of the production method of the present invention, when laminating a plurality (at least four layers) of Nd-Fe-B thin plate-shaped sintered magnets to produce a Nd-Fe-B multilayer magnet, a method, in which an adhesive such as epoxy resin is simply applied to the Nd-Fe-B thin plate-shaped sintered magnets to adhere the unit magnets together for lamination, may be used, or a method of injection dieing in which a plurality of the Nd-Fe-B thin plate-shaped sintered magnets are fixed in a die in a stacked state, and then a resin is injected into the die to adhere may be used.

In the method of laminating the Nd-Fe-B thin plate-shaped sintered magnet by adhesion, the adhesive acts to increase the electrical resistance between the layers. In the method of laminating the Nd-Fe-B thin plate-shaped sintered magnet by hot pressing, it is effective to apply an oxide of neodymium to the thin plate-shaped magnet before hot pressing in addition to the oxide film on the surface of the thin plate-shaped magnet. Furthermore, it was confirmed that when powders of oxides or fluorides of Tb and Dy are applied to the surface of the thin plate-shaped magnet and hot-pressed, these powders not only act on the grain boundary diffusion effect of the magnet but also act on the increase in electrical resistance between the thin plate-shaped magnets. It was also confirmed that when silicon oil or silicon grease is applied to the thin plate magnet, oxygen, carbon, and silicon contained in these resins react with the magnet components to form a high electrical resistance layer.

The term "high electrical resistance layer" in the present specification refers to an oxide film formed on the surface of the thin plate-shaped magnet, an adhesive to be applied, or the above-described compound, and further, when adhered by a hot press method, the layer is made of an oxide formed on the surface of the thin plate, a fluoride or an oxide of Tb or Dy, or a mixture or a reaction product of a resin or silicon grease applied before hot press. These applied materials and reaction products formed during hot pressing act as a high electrical resistance layer. It is desirable that such a high electrical resistance layer is as thin as possible and have a high electrical resistivity. The thickness of the high electrical resistance layer is preferably 0.1 mm or less, more preferably 0.05 mm or less. With these high electrical resistance layers, the electrical resistance value measured with electrodes attached to both end surfaces of the laminated magnet is preferably 5 times or more, more preferably 10 times or more, and most preferably 100 times or more of the electrical resistance value measured with electrodes attached to both end surfaces of a single unlaminated magnet of the same size.

In the present invention, when the Nd-Fe-B thin plate-shaped sintered magnets are adhered to each other, it is preferable that a compound powder or an alloy powder containing Dy and/or Tb is applied to each of the Nd-Fe-B thin plate-shaped sintered magnets to perform a grain boundary diffusion treatment, and then the Nd-Fe-B thin plate-shaped sintered magnets are adhered to each other.

Further, in the present invention, it is preferable that the Nd-Fe-B thin plate-shaped sintered magnets are adhered or pressure-bonded to each other in a state where a compound powder or an alloy powder containing Dy and/or Tb is interposed between the Nd-Fe-B thin plate-shaped sintered magnets, and then grain boundary diffusion treatment is performed.

At this time, the compound powder or alloy powder containing Dy or Tb is suspended in an organic solvent such as ethyl alcohol and applied to the unit magnet. From the viewpoint of resources, it is preferable that the coating amount is such that the heavy rare earth metal component contained in the coated powder is 0.5% or less of the weight of the unit magnet. The grain boundary diffusion treatment is performed by stacking the unit magnets coated with these compound powders containing Dy and Tb and heating the unit magnets in vacuum or inert gas at 800 to 900°C for 5 to 20 hours, and thereafter, the unit magnets are adhered or pressure-bonded by hot pressing to produce a laminated magnet.

In a case where a laminated magnet is produced by pressure-bonding the unit magnet coated with a compound powder containing Dy or Tb by hot pressing, it is preferable to perform heating at 800 to 900°C for a long time of 5 to 20 hours after hot pressing in order to enhance the grain boundary diffusion effect.

Preferred compound powders or alloy powders containing Dy and/or Tb in the present invention include R₂O₃, R₄O₇, RF₃, or a mixture of RF₃ and LiF (lithium fluoride) in which Dy or Tb is represented as R. Also, preferred examples are hydride powders obtained by hydrogenating and pulverizing an alloy of Dy and/or Tb and a metal element such as Fe, Ni, or Al, or powders of rare earth hydride represented by RH_{δ}. When these metal hydrides are heated to a high temperature of 800°C or higher, they become dehydrogenated metals or alloy powders. As a laminated magnet, it is desirable for the adhesive layer to have a high electrical resistance, so the metal powder or the metal hydride powder is used for forming the adhesive layer as a mixed powder with the aforementioned rare earth oxide or rare earth fluoride powder.

By using the above-described method for producing a Nd-Fe-B thin plate-shaped sintered magnet, the present inventor has confirmed that an ultra-thin sintered magnet having a thickness of 3 mm or less, preferably 2.5 mm or less, and even thinner, up to a thickness of 0.8 mm can be produced. Then, it was confirmed that the multilayer magnet can be produced without performing machining by laminating the thin plate-shaped sintered magnets thus produced.

In the conventional technique, the thin plate-shaped magnets are produced by cutting Nd-Fe-B magnet or by machining such as grinding using a grindstone. There are problems that cutting and grinding are expensive, and a large amount of chips are generated, thereby lowering the material yield. In the production method of the present invention, a unit magnet can be produced without cutting or grinding, and the unit magnets thus produced can be laminated to produce a multilayer magnet.

A multilayer sintered magnet obtained by laminating four or more layers of Nd-Fe-B thin plate-shaped sintered magnets produced using the above-described production method can be used, for example, in electric vehicle main motors or the like.

The multilayer sintered magnet of the present invention has a structure in which a plurality of Nd-Fe-B thin plate-shaped sintered magnets of the same quality are laminated, and in order to obtain the effect of reducing eddy current intended by the present invention, it is necessary to laminate a plurality of Nd-Fe-B thin plate-shaped sintered magnets, but from the viewpoint of convenience when loading the magnets into a motor, the number of laminated magnets is preferably four or more, and the number of laminated magnets is practically ten or more for a main motor of an electric vehicle.

At this time, in order to reduce eddy current loss during motor operation, it is necessary to laminate the thin plate-shaped sintered magnets via a high electrical resistance layer interposed between them. It is known that the electrical resistance value of the high electrical resistance layer does not need to be a high resistance close to electrical insulation.

In the production method of the present invention, when the Nd-Fe-B thin plate-shaped sintered magnet is produced, any one of the following methods can be used:
a) Pressless process method (PLP method) in which an alloy powder is fed and filled into a mold having a structure partitioned by a plurality of partition plates arranged at a predetermined interval, then orientation in a magnetic field is performed in a direction parallel to a main surface of a cavity partitioned by the partition plates, and then the alloy powder is conveyed to a sintering furnace and sintered while still filled in the mold; or
b) New pressless process method (NPLP method) in which an alloy powder is fed and filled into the mold having a side wall divided into two or more sections and having a structure partitioned by a plurality of partition plates arranged at a predetermined interval to produce a filled body, then a magnetic field is applied in the direction inside the main surface of the filled body to orient the alloy powder in the filled body to produce an orientated-filled body, then the side wall of the mold is separated from the orientated-filled body to take out the orientated-filled body from the mold, and the orientated-filled body taken out is sintered.

In the present invention, since the Nd-Fe-B thin plate-shaped sintered magnet is produced using the PLP method or the NPLP method, unlike the conventional method in which a block-shaped sintered magnet is produced and then cut to a determined thickness, the thin plate-shaped magnet can be directly obtained without going through a cutting step. Therefore, in the case of the Nd-Fe-B thin plate-shaped sintered magnet produced by using the production method of the present invention, there is no deterioration in magnetic properties due to machining as is well known in the related art.

The PLP method described in the present invention is shown in Japanese Patent No. 4391897, etc., and the NPLP method is shown in Japanese Patent No. 6280137, and in these methods, the magnetization direction is the thickness direction of the magnet, which is perpendicular to the main surface (plate surface) of the magnet. In the present invention, the producing process of the thin plate-shaped magnet as a unit magnet constituting the laminated magnet is almost the same as the above-described PLP method and NPLP method, but in the producing method of the thin plate-shaped magnet for use in the laminated magnet in the present invention, the magnetization direction in the process is the direction within the main surface of the magnet (the direction parallel to the main surface).

In the present invention, an oxide film is formed on the surface of the thin plate-shaped magnet produced by the PLP method or the NPLP method, and it was confirmed that this naturally formed oxide film is effective for increasing the electrical resistance between the thin plate-shaped magnets. Furthermore, the present inventor has found that the surface layer containing a large amount of Nd has an effect of suppressing deterioration of the magnetic properties of the thin plate-shaped magnet, and confirmed that the coercive force of the magnet is reduced if this surface layer is peeled off.

Therefore, in the present invention, it is preferable to effectively utilize the surface layer containing a large amount of Nd generated during the sintering step without being completely peeled off, and to laminate the Nd-Fe-B thin plate-shaped sintered magnets while leaving at least a part of the surface layer containing a large amount of Nd generated during the sintering step on the surface of the Nd-Fe-B thin plate-shaped sintered magnet.

Here, the term "during the sintering step" includes the process of raising the temperature, maintaining the sintering temperature, and cooling in the sintering furnace. It is presumed that a surface layer containing a large amount of Nd formed on the surface of the unit magnet is generated during the sintering step. In the conventional method for producing a thin plate, a relatively large block of sintered magnet body is made, and then a thin plate-shaped magnet is produced mainly by cutting, but the production method of the present invention does not require a cutting step. In the present specification, the expression "without a cutting step" means that a thin plate-shaped sintered magnet is directly obtained, not by cutting the block sintered body.

In the present invention, the generally well-known notation "Nd-Fe-B" is adopted for the Nd-Fe-B sintered magnet, however, it does not have only Nd, Fe, and B elements as constituent elements. Nd represents a rare earth element including Y and Sc, and specific examples thereof include Y, Sc, La, Ce, Pr, Nd, Eu, Gd, Tb, Dy, Ho, Yb, and Lu, and one or more of these elements are shown. Preferably, Nd, Pr, Dy, and Tb are the main constituents. The content of these rare earth elements including Y and Sc is preferably 10 to 15 atom%, particularly preferably 12 to 15 atom% of the entire alloy. B is preferably contained in an amount of 3 to 15 atom%, particularly 4 to 8 atom%. In addition, one or two or more kinds selected from Al, Cu, Zn, In, Si, P, S, Ti, V, Cr, Mn, Ni, Ga, Ge, Zr, Nb, Mo, Pd, Ag, Cd, Sn, Sb, Hf, Ta, and W may be contained in an amount of 0 to 11 atom%, particularly 0.1 to 5 atom%. The balance is Fe and inevitable impurities such as C, N, and O, etc., but Fe is preferably contained in an amount of 50 atom% or more, particularly 65 atom% or more. Further, a part of Fe, for example, 0 to 40 atom%, particularly 0 to 15 atom% of Fe may be replaced with Co.

The Nd-Fe-B multilayer sintered magnet of the present invention, in which the Nd-Fe-B thin plate-shaped sintered magnets produced by the PLP method or the NPLP method are laminated by adhesion or compression bonding (welding) by hot pressing, is characterized by that the Nd-Fe-B multilayer sintered magnet is a laminate in which a plurality, preferably four or more, particularly preferably ten or more of Nd-Fe-B thin plate-shaped sintered magnets, in which c-axis direction of a Nd₂Fe₁₄B tetragonal compound is oriented within the main surface of the Nd-Fe-B thin plate-shaped sintered magnet, and which has a high orientation degree (as evaluated by the value obtained by dividing the residual magnetic flux density Br by the saturation magnetization Js) of 90% or more and a thickness of 3 mm or less, are laminated.

In the present invention, it is preferable that the Nd-Fe-B thin plate-shaped sintered magnet is subjected to grain boundary diffusion treatment, and the Nd-Fe-B thin plate-shaped sintered magnet is laminated by bonding with an adhesive.

Further, in the present invention, it is preferable that an adhesive layer formed by hot press-bonding a compound (for example, an oxide) powder or an alloy powder containing Dy and/or Tb is present between the Nd-Fe-B thin plate-shaped sintered magnets, and the Nd-Fe-B thin plate-shaped sintered magnets are adhered to each other and laminated by the adhesive layer, and such an adhesive layer functions as a high electrical resistance layer.

Here, it is preferable to minimize the Dy and Tb contents in the Nd-Fe-B thin plate-shaped sintered magnet (unit magnet) from the viewpoint of resources. As the above-mentioned high electrical resistance layer, a gap between thin plate-shaped magnets, an adhesive layer, an oxide film or an oxygen-rich film formed during the production of a unit magnet, and a layer made of an oxide or a fluoride of Dy or Tb or a modified substance thereof applied for grain boundary diffusion treatment serve to work.

By using the production method of the present invention, a Nd-Fe-B multilayer sintered magnet composed of ultra-thin unit magnets can be produced without performing a cutting step, and this laminated sintered magnet has magnetic uniformity and high magnetic characteristics, and is useful not only as a magnet for an electric vehicle but also as a magnet for various industrial and household motors.

### EXAMPLES

### [Example 1]

A mold shown in FIG. 2 was produced. The material of the mold is stainless steel (SUS304), reference numeral 1 in FIG. 2 denotes a side plate, reference numeral 2 denotes a bottom plate, reference numeral 3 denotes a partition plate, reference numeral 4 denotes a magnetic pole, reference numeral 5 denotes a cavity, and reference numeral 6 denotes a lid.

Then, as a starting alloy (strip cast alloy = SC alloy) for producing a Nd-Fe-B sintered magnet, an alloy powder having the composition described in Table 1 below was prepared.

**[Table 1]**

| Nd | Pr | Co | Cu | Al | B | Fe |
|---|---|---|---|---|---|---|
| 26.5 | 5.0 | 0.9 | 0.1 | 0.2 | 0.96 | bal. |
| (Weight percent) | | | | | | |

The SC alloy having the above composition was subjected to hydrogen pulverization, and pulverized to an average particle diameter D50 of 3 um by a jet mill using nitrogen. This jet-milled powder was then filled into the mold shown in FIG. 2 at a filling density of 3.5 g/cm³. Next, the mold was inserted into an orientation coil, and a pulse magnetic field of 4 Tesla was applied in the direction of the arrow in FIG. 2 to orient the alloy powder.

The mold used in this example has 28 cavities, and the size of each cavity is 18.2 mm in width (referred to as a width a), 10.8 mm in height (referred to as a height b), and 2.35 mm in gap width (referred to as a gap width c). Each cavity is separated by a partition plate, which is made of stainless steel and has a thickness of 0.5 mm.

When the above alloy powder was fed, the alloy powder was weighed for each cavity so that the weight of the alloy powder fed to each cavity became uniform, and fed to each cavity.

Specifically, the total amount of the alloy powder was 45.27 g, and 1.616 g of the alloy powder was precisely weighed and fed into each cavity. Thereafter, the magnetic pole, the lid and the side plate were sequentially removed from the mold, and the alloy powder molded body including the partition plate was transferred to the carbon plate, and then loaded into the vacuum sintering furnace.

In this way, a thin plate-shaped magnet oriented in the plane was produced. The thin plate-shaped magnet is a unit constituting a multilayer magnet.

The sintering conditions are as follows. After evacuating to 1×10⁻³ Pa or less, the temperature was raised to 400°C at a heating rate of 1°C/min in vacuum, and then held at 400°C for 9 hours. Further, the temperature was raised to 1000°C at a heating rate of 2°C/min, and then held at 1000°C for 3 hours, and then cooled in the furnace to obtain a Nd-Fe-B thin plate-shaped sintered magnet. The dimensions of the sintered magnet after sintering were approximately a=15.5 mm, b=7 mm, and c (thickness)=2 mm. This sintered magnet is hereinafter referred to as a "unit magnet".

It was confirmed that the degree of orientation (Br/Js) of the unit magnet obtained by the above sintering was 95% or more, and the unit magnet had a high degree of orientation.

Tb₂O₃ powder having an average particle size of 5 um was applied to the upper and lower surfaces of the unit magnet immediately after sintering. The coating amount was set to 0.5% of the weight of the unit magnet, and the powder was suspended in liquid paraffin, and the suspension was applied to the unit magnet. 15 unit magnets coated with the Tb₂O₃ powder in this manner were stacked and hot-pressed to produce a multilayer magnet.

15 unit magnets were stacked and loaded into a split mold made of graphite, and hot-pressed to produce a Nd-Fe-B multilayer sintered magnet of the present invention. The inner dimensions of the split mold were set to a=16.0 mm and b=7.2 mm, assuming the product dimensions. The hot press conditions were maintained in vacuum at 750°C under pressure of 40 MPa for 10 minutes.

The strength of the Nd-Fe-B multilayer sintered magnet produced in this manner was evaluated, and it was confirmed that the multilayer sintered magnet had strength comparable to that of the sintered magnet.

Next, when the dimensions of this multilayer magnet were evaluated, they were a=16.0 mm, b=7.2 mm, and c'(laminate thickness)=28.1 mm, and the dimensions of a and b were the same as the inner dimensions of the split mold. Therefore, it is thought that the stacked unit magnet deformed toward the inner wall of the mold simultaneously with joining during hot pressing, and the deformation stopped after reaching the inner wall, and it was found that a multilayer integrated magnet having dimensions as designed can be realized without adding any processing.

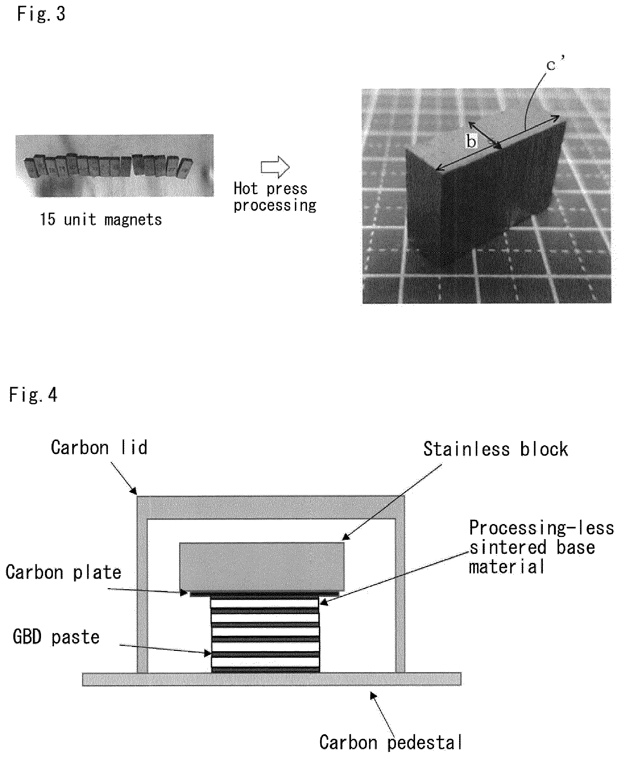

FIG. 3 shows a photograph showing the appearance of the unit magnets produced in Example 1 and a laminate produced by laminating them and hot pressing.

The hot-pressed laminate thus produced was heat-treated at 800°C for 1 hour and 500°C for 1 hour, and then a 7 mm square cube was cut out and subjected to magnetic measurement. The results are shown in Table 2.

**[Table 2]**

| Br (G) | Js (G) | HcB (Oe) | Hcj (Oe) | (BH) max (MGOe) | (Br/Js) x100 | Hk (Oe) | (Hk/Hcj) x100 |
|---|---|---|---|---|---|---|---|
| 14262 | 14831 | 13717 | 19455 | 49.9 | 96.2 | 18112 | 93.1 |

As a result of SEM observation of the cross section of the above hot-pressed laminate, it was confirmed that a high electrical resistance layer made of a material in which an oxide of Tb, an oxide of Nd, and an Nd-Fe-B alloy are mixed was formed in the cross section of the laminate.

### [Example 2]

Five unit magnets produced by the method of Example 1 were prepared, and TbF₃ powder (GBD paste) was applied to the upper and lower surfaces of the unit magnet so that the Tb weight was 0.3% based on the total weight of five unit magnets between the unit magnets (processing-less sintered base material) as shown in FIG. 4. A stainless block having a weight of 5 kg was placed on the laminate of five unit magnets, and placed in a vacuum furnace, and the laminates were heat-treated at 900°C for 10 hours in vacuum. Thereafter, heat treatment was performed at 500°C for 1 hour.

A thin plate of 7 mm square was cut out from one of the unit magnets subjected to the heat treatment described above, and the magnetic properties were measured. The results are shown in Table 3.

**[Table 3]**

| Br (G) | Js (G) | HcB (Oe) | Hcj (Oe) | (BH) max (MGOe) | (Br/Js) x100 | Hk (Oe) | (Hk/Hcj) x100 |
|---|---|---|---|---|---|---|---|
| 14400 | 14919 | 13777 | 22449 | 50.1 | 96.5 | 20755 | 92.5 |

From the results in Table 3, it was found that a high coercive force can be obtained even when the grain boundary diffusion treatment is performed in a simple laminated state in which TbF₃ powder is placed between the unit magnets and a weight is merely placed thereon. It was also confirmed that a high-performance Nd-Fe-B multilayer magnet having the magnetic properties shown in Table 3 and having high interlayer insulating properties can be obtained by laminating five unit magnets subjected to grain boundary diffusion treatment by adhering with an adhesive.

### [Example 3]

Five unit magnets produced in Example 1 were prepared, and after chamfering for burr removal was performed, a two-liquid epoxy resin of a long-time curing type was uniformly applied to both surfaces of each unit magnet using a spatula, and five unit magnets were stacked, and a weight of about 500 g was placed thereon and cured. At this time, in order to shorten the curing time, the laminated magnet was placed in an oven at 90°C and held for 1 hour, and then taken out to produce the Nd-Fe-B multilayer sintered magnet of the present invention.

As a result of measuring the resistivity at both ends of the laminated magnet produced as described above, it was found that the resistivity was greater than 6.5 MΩ · cm.

Further, the eddy current loss of the laminated magnet produced above was measured. For comparison, an integrated magnet (block-shaped magnet) having the same size as the laminated magnet was also produced and subjected to the same measurement.

Furthermore, the test magnet was placed at the center of the air-core coil, and the AC resistance Rs of the coil was measured when an AC magnetic field of 20 mA was applied in the frequency range of 100 to 50 kHz. In addition, the AC resistance Rs of the coils of the integrated magnets having the same size was also measured under the same conditions, and the two were compared.

As a result, it was found that the produced multilayer magnet had the AC resistance Rs of the coil of 24.7% compared to the integrated magnet, and it was confirmed that the multilayer magnet exhibited a large eddy current reduction effect.

### [Example 4]

A unit magnet was produced by the same method using the same alloy and the same powder as those of Example 1. A part of the unit magnet was polished with a sand paper to an entire surface of 0.1 mm. Then, all the magnets were subjected to heat treatment in which the magnets were held at 800°C for 1 hour and then rapidly cooled, and further held at 500°C for 1 hour and then rapidly cooled. Using these two types of unit magnets (with polishing and without polishing), laminated magnets were produced by laminating five unit magnets each by adhesion with epoxy resin.

For each of the two types of laminated magnets thus produced, three 7 mm square cubic samples were cut out, and the magnetic properties were measured using a B-H tracer.

As a result, the average value of the magnetic properties was the residual magnetic flux density Br=14.1 kG and the coercive force Hcj=14.8 kOe for the laminated magnet (comparative product) obtained by laminating the unit magnets subjected to the entire surface polishing. On the other hand, the laminated magnet (the product of the present invention) obtained by laminating unit magnets which were not subjected to machining had Br=14.4 kG and Hcj=16.1 kOe. Although there is no significant difference in Br between the two laminated magnets, it was found that the coercive force Hcj of the laminated magnet (the product of the present invention) produced from the unit magnet with no mechanical processing was larger by 1 kOe or more than that of the laminated magnet (comparative product) produced from the unit magnet with the entire surface polishing.

From such experimental results, it is presumed that the Nd-Fe-B thin plate-shaped magnet produced by the NPLP method has a surface layer rich in Nd, and the magnetic deterioration of crystal grains near the surface of the magnet is suppressed by this surface layer. That is, in the method of producing a Nd-Fe-B sintered magnet by a normal press method, since a thin plate magnet is produced by cutting out from a large block magnet, there is no Nd-rich surface layer on the surface of the thin plate-shaped magnet, and therefore, it is considered that the coercive force of the laminated magnet produced from the thin plate-shaped magnet obtained by cutting the block magnet is lower by about 1 kOe.

This Example 4 proved that the Nd-Fe-B multilayer magnet produced by the production method of the present invention is more advantageous in terms of magnetic properties than the laminated magnet produced by the conventional method.

### [Example 5]

Using the same Nd-Fe-B alloy powder as in Example 1, the width a and the height b in the mold of FIG. 2 were the same as in Example 1, and only the gap width c was changed to produce unit magnets having three kinds of thicknesses, which had sintered body thicknesses of 2 mm, 3 mm, and 5 mm after sintering. Using these unit magnets, a hot-pressed laminate in which five unit magnets were stacked was produced under the same conditions as in Example 1. Further, unit magnets were produced by subjecting the same unit magnet to grain boundary diffusion treatment using TbF₃ under the same conditions as in Example 2, and five sheets of the unit magnet were adhered with a resin to produce a laminated magnet.

The results of measuring the AC resistance values of these hot-pressed laminated magnets and resin-adhered laminated magnets are shown in Table 4. The AC resistance value was measured by winding a coil around each magnet for 50 turns and changing the frequency of the alternating magnetic field with an IM3536 LCR meter manufactured by HIOKI Corporation. The results at a measurement current of 1 mA and a frequency of 30 kHz are shown in Table 4.

**[Table 4]**

| Types of Laminated magnet | Thickness of unit magnet (mm) | AC resistance (Ω) | Coercive force (Hcj) (kOe) | Squareness (Hk/Hcj) (%) | |
|---|---|---|---|---|---|
| Non-laminated one piece product | - | 35 | 15 | 91 | Comp.Ex. |
| Hot-pressed product | 5 | 30 | 19 | 85 | Comp. Ex . |
| | 3 | 15 | 21 | 93 | Example |
| | 2 | 8 | 23 | 94 | Example |
| Adhered product | 5 | 20 | 19 | 85 | Comp.Ex. |
| | 3 | 10 | 21 | 92 | Example |
| | 2 | 3 | 23 | 94 | Example |

From Table 4, it can be seen that the reduction of the AC resistance is remarkable when the thickness of the unit magnet is 3 mm or less, and the squareness of the magnet is 90% or more, which is desirable as a magnet for EVs.

### [Example 6]

A unit magnet was produced from an SC alloy having the composition shown in Table 5 by the method of Example 1. An oxide film (high electrical resistance layer) was formed on the surface of the unit magnet by sintering, and a laminated magnet in which 24 layers of unit magnets were stacked was produced by the method of Example 1 using the unit magnet. Here, the laminated magnet was produced by hot-pressing 24 layers of the laminated body with nothing sandwiched between the unit magnets. The hot press conditions were a maximum temperature of 850°C, a maximum pressing force of 65 MPa, and a holding time of 20 minutes. The obtained laminated magnet was subjected to aging treatment in vacuum at 800°C for 30 minutes and then at 520°C for 1 hour.

**[Table 5]**

| Nd | Pr | Dy | Co | Cu | Al | B | Fe |
|---|---|---|---|---|---|---|---|
| 22.4 | 4.9 | 3.9 | 0.9 | 0.1 | 0.2 | 0.96 | bal. |

| | | | | | | | |
|---|---|---|---|---|---|---|---|
| (Weight percent) | | | | | | | |

The magnetic properties of the obtained laminated magnet were Br=13890G, Hcj=20210Oe, and (BH)max=47.0MGOe, and the laminated magnet was able to pass the mechanical strength and toughness test without any problem. Therefore, for applications requiring lower heat resistance temperature, such a laminated magnet produced without anything sandwiched between layers can be used.

### EXPLANATIONS OF LETTERS OR NUMERALS

- 1: Side plate
- 2: Bottom plate
- 3: Partition plate
- 4: Magnetic pole
- 5: Cavity
- 6: Lid

## Claims

1. A method for producing a Nd-Fe-B multilayer sintered magnet in which Nd-Fe-B thin plate-shaped sintered magnets are laminated via a high electrical resistance layer, the method comprising the steps of:
producing a Nd-Fe-B thin plate-shaped sintered magnet in which the c-axis direction of an Nd₂Fe₁₄B tetragonal compound is oriented within the main surface of the Nd-Fe-B thin plate-shaped sintered magnet, and which has a high degree of orientation of 90% or more and a thickness of 3 mm or less, without performing a cutting step, by supplying and filling an alloy powder into a mold having a structure partitioned by a plurality of partition plates arranged at a predetermined interval, applying a magnetic field in a direction parallel to a main surface of a cavity partitioned by the partition plates to orient the alloy powder, and then performing sintering, and
laminating a plurality of Nd-Fe-B thin plate-shaped sintered magnets obtained by the above step.

2. The method for producing a Nd-Fe-B multilayer sintered magnet according to Claim 1, **characterized in that** the Nd-Fe-B thin plate-shaped sintered magnets are laminated in a state where at least a portion of the surface layer containing a large amount of Nd generated during the sintering on the surface of the Nd-Fe-B thin plate-shaped sintered magnet is left.

3. The method for producing a Nd-Fe-B multilayer sintered magnet according to Claim 1 or 2, **characterized in that** the Nd-Fe-B thin plate-shaped sintered magnets are laminated together by adhesion.

4. The method for producing a Nd-Fe-B multilayer sintered magnet according to Claim 1 or 2, **characterized in that** the Nd-Fe-B thin plate-shaped sintered magnets are pressure-bonded by hot pressing.

5. The method for producing a Nd-Fe-B multilayer sintered magnet according to Claim 1 or 2, **characterized in that** a compound powder or an alloy powder containing Dy and/or Tb is applied to each of the Nd-Fe-B thin plate-shaped sintered magnets to perform grain boundary diffusion treatment, and then the Nd-Fe-B thin plate-shaped sintered magnets are adhered to each other.

6. The method for producing a Nd-Fe-B multilayer sintered magnet according to Claim 1 or 2, **characterized in that** the Nd-Fe-B thin plate-shaped sintered magnets are adhered or pressure-bonded to each other in a state where a compound powder or an alloy powder containing Dy and/or Tb is interposed between the sintered Nd-Fe-B thin plate-shaped magnets, and then grain boundary diffusion treatment is performed.

7. The method for producing a Nd-Fe-B multilayer sintered magnet according to Claim 3, **characterized in that** the Nd-Fe-B thin plate-shaped sintered magnets are adhered to each other using an adhesive.

8. The method for producing a Nd-Fe-B multilayer sintered magnet according to Claim 3, **characterized in that** a plurality of the Nd-Fe-B thin plate-shaped sintered magnets are fixed in a state of being stacked in an injection die, and then a resin is injected into the die to adhere and form.

9. The method for producing a Nd-Fe-B multilayer sintered magnet according to any one of Claims 1 to 8, **characterized in that** 10 or more layers of the Nd-Fe-B thin plate-shaped sintered magnet are laminated.

10. The method for producing a Nd-Fe-B multilayer sintered magnet according to any one of Claims 1 to 9, **characterized in that** the Nd-Fe-B thin plate-shaped sintered magnet is produced by using any one of the following methods:
a) a method in which an alloy powder is supplied and filled into a mold partitioned by a plurality of partition plates arranged at a predetermined interval, then orientation in a magnetic field is performed in the direction parallel to a main surface of a cavity partitioned by the partition plates, and then the alloy powder is conveyed to a sintering furnace and sintered while still filled in the mold; or
b) a method in which an alloy powder is supplied and filled into the mold having a side wall divided into two or more sections and having a structure partitioned by a plurality of partition plates arranged at a predetermined interval to produce a filled body, then a magnetic field is applied in the direction inside the main surface of the filled body to orient the alloy powder in the filled body to produce an orientated-filled body, then the side wall of the mold is separated from the orientated-filled body to take out the orientated-filled body from the mold, and the orientated-filled body taken out is sintered.

11. A Nd-Fe-B multilayer sintered magnet, which is a laminate, in which four or more layers of Nd-Fe-B thin plate-shaped sintered magnets in which c-axis direction of a Nd₂Fe₁₄B tetragonal compound is oriented in the main surface of the Nd-Fe-B thin plate-shaped sintered magnet, and which have a high orientation degree of 90% or more and a thickness of 3 mm or less, are laminated by adhesion or hot press compression bonding.

12. The Nd-Fe-B multilayer sintered magnet according to Claim 11, wherein the Nd-Fe-B thin plate-shaped sintered magnet is subjected to grain boundary diffusion treatment, and the Nd-Fe-B thin plate-shaped sintered magnet is adhered with an adhesive or is laminated by hot press compression bonding.
